# EUROPÄISCHE PATENTSCHRIFT

(11) **EP 0 643 462 B1**
(45) Veröffentlichungstag und Bekanntmachung des Hinweises auf die Patenterteilung: **12.03.1997**
(21) Anmeldenummer: 94112020.6
(22) Anmeldetag: 02.08.1994
(51) Int. Cl.: H02G 3/04, E04F 19/04, E04F 17/08

(54) **Installationskanal**
Installation raceway
Gaine d'installation

(30) Priorität: 09.09.1993 DE 9313608 U
(43) Veröffentlichungstag der Anmeldung: 15.03.1995
(73) Patentinhaber: REHAU AG + Co, 95111 Rehau (DE)
(72) Erfinder: Peetz, Matthias, D-95111 Rehau (DE)

(56) Entgegenhaltungen:
- DE-A- 4 103 708
- DE-U- 7 216 572
- DE-U- 7 931 274
- DE-U- 8 520 266

## Beschreibung

Die Neuerung betrifft einen Installationskanal zur Verlegung von elektrischen Leitungen mit einem Boden und zwei einstückig mit diesem verbundenen Seitenwänden, welche an ihren freien Rändern längsverlaufend rechtwinkelig zum Kanalinneren gerichtete Wandbereiche aufeisen, die als Lagerstelle für Installationsbrücken, Leitungsklammern o.ä. Installationshilfen ausgebildet sind.

Aus dem DE-U 79 31 274 ist eine Stützbrücke für Kabelkanäle bekannt, deren Öffnungsränder in Kanallängsrichtung verlaufende Langlöcher aufweisen. In diese Langlöcher werden an den Stützbrücken befindliche Rastnasen eingesetzt, wobei durch diese Maßnahme ein Zusammendrücken der Kanalseitenwände verhindert wird. Nachteilig hierbei ist, daß bei der Montage der Stützbrücken die jeweils den betreffenden Langlöchern zugeordneten Rastnasen in Deckung gebracht werden müssen, bevor der Rastvorgang erfolgen kann.

Aus der EP 0 239 945 A 2 ist ein weiterer Leitungsführungskanal bekannt, der einen im wesentlichen rechteckigen Querschnitt mit einer offenen Vorderseite zum Einlegen und Herausnehmen von elektrischen Leitungen besitzt. Parallel zum Kanalboden sind an den freien Enden der Seitenwände zum Kanallumen gerichtete Längsleisten mit L-förmigem Querschnitt angeformt. Die offene Seite des Leitungsführungskanals wird mit Hilfe von Klammern überbrückt. Diese Klammern besitzen an ihrem einen freien Ende einen hakenförmigen Klammerfuß mit einer federnden Zunge sowie an ihrem anderen freien Ende einen ebenfalls hakenförmigen Klammerkopf. Der Klammerfuß wird auf eine der Längsleisten federnd aufgesteckt und die Klammer selbst kann zum Einlegen oder Herausnehmen von Leitungen federnd verschwenkt werden.

Dieser Leitungsführungskanal ist nur in seitlicher Lage einsetzbar, da die Klammer nur im Bereich des hakenförmigen Klammerfußes mit der federnden Zunge an der zugeordneten Längsleiste festlegbar ist. Im Bereich des Klammerkopfes auf der gegenüberliegenden Seite der Klammer liegt diese lediglich an der zugeordneten Längsleiste mit dem L-förmigen Querschnitt an.

Hier setzt die Neurung ein, die es sich zur Aufgabe gestellt hat, eine Klammer zur Festlegung der Seitenwände von Installationskanälen anzugeben, die bei jeder Lage des Installationskanals ihren festen Sitz beibehält und auch eine Nachinstallation von Kabeln in jeder Lage des Kabelkanals ermöglicht. Neuerungsgemäß wird dazu vorgeschlagen, daß die Wandbereiche an ihren freien Enden ins Kanalinnere konvergierend zueinander verlaufende Abwinkelungen aufweisen, und daß die Installationsklammern an ihren freien Enden divergierend voneinander weggerichtete gabelförmige Abkröpfungen besitzen, welche mit ihren Gabelöffnungen zu den Abwinkelungen gerichtet sind und in ihrer lichten Gabelweite den Querschnittsabmessungen der Abwinkelungen entsprechen.

Der Vorteil dieser Anordnung wird darin gesehen, daß sich die Installationsklammern beidseitig in die Abwinkelungen an den rechtwinkelig zum Kanalinneren gerichteten Wandbereichen der Seitenwände des Installationskanals einschieben lassen. Dies geschieht einfach dadurch, daß die Installationsklammer schräg bzw. parallel zur Längsachse des Installationskanals in die offene Seite des Installationskanals eingeführt und dann mit beiden gabelförmigen Abkröpfungen in die konvergierend zueinanderverlaufenden Abwinkelungen eingedreht und dabei dort verklemmt werden. Die solcherart festgelegte Installationsklammer hält die Seitenwände des Installationskanals danach auf ihrem vorbestimmten Abstand und verhindert das Herausfallen der eingelegten Kabel.

Es hat sich hierbei als vorteilhaft erwiesen, daß die Installationsklamern eine axial verlaufende Verstärkungssicke aufweisen, welche in vorgegebenem Abstand von den Abkröpfungen endet. Durch diese Maßnahme wird die Installationsklammer in sich verstärkt, was besonders bei einer Überkopfmontage von Vorteil ist, um die Last der Kabel aufnehmen zu können.

Ferner erscheint es zweckmäßig, daß die die gabelförmigen Abkröpfungen bildenden Gabelschenkel in unterschiedlicher Länge ausgebildet sind.

Auf diese Weise läßt sich das bereits beschriebene Eindrehen bzw. Einschieben der Installationsklammer in die Abwinkelungen der Wandbereiche des Installationskanals leichter bewerkstelligen.

In diesem Zusammenhang erscheint es vorteilhaft, daß die äußeren Gabelschenkel kürzer ausgebildet sind als die inneren Gabelschenkel.

Der neuerungsgemäße Installationskanal besitzt den Vorteil, daß die Installationsklammern sowohl bei senkrechter als auch bei waagerechter Kanalmontage durch die Klemmwirkung der gabelförmigen Abkröpfungen in den konvergierend zueinanderverlaufenden Abwinkelungen gegen Verrutschen und Herausfallen gesichert sind. Ein weiterer Vorteil ist, daß die Installationsklammern an jeder Stelle der konvergierend zueinanderverlaufenden Abwinkelungen der Seitenwände installiert werden können, ohne daß hier spezielle Öffnungen gesucht werden müßten. Nach waagerechter Montage kann ferner die Installationsklammer, um das Belegen mit Kabeln zu erleichtern, nur einseitig im unteren Bereich eingerastet werden. Dabei können die Kabel parallel zum Installationskanal ausgelegt werden, so daß die Länge festgestellt und anschließend die Kabel von oben in den Kanal eingeführt werden können. Damit entfällt das aufwendige Einfädeln um die fertig montierten Klammern herum.

In der Zeichnung ist ein Ausführungsbeispiel des neuerungsgemäßen Installationskanals mit Installationsklammer schematisch dargestellt; es zeigt:
Fig.1 einen Querschnitt durch einen Installationskanal mit fertig montierter Installationsklammer.
Fig.2 eine Seitenansicht der Installationsklammer

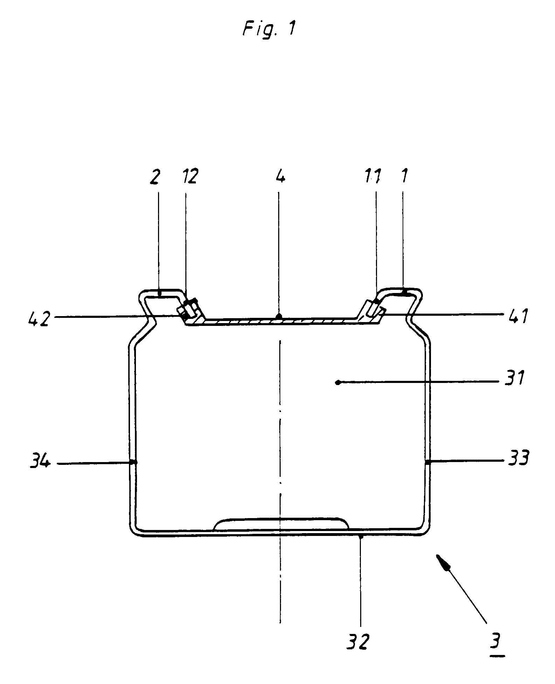

In Fig.1 ist der Installationskanal 3 mit dem Kanalinnenraum 31 im Querschnitt dargestellt. Der Installationskanal 3 besteht aus der Basiswand 32 und den Seitenwänden 33, 34. An den freien Enden der Seitenwände 33, 34 sind die Wandbereiche 1, 2 annähernd rechtwinkelig zum Kanalinnenraum 31 hin verlaufend angeformt.

Die Wandbereiche 1, 2 besitzen an ihren freien Enden konvergierend zueinanderverlaufende Abwinkelungen 11, 12.

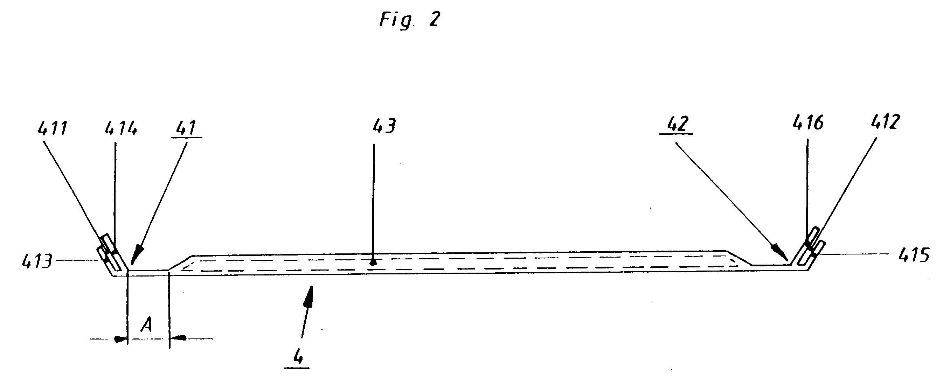

In der gezeigten Darstellung sind diese Abwinkelungen 11, 12, in die Gabelöffnungen 411, 412 (Fig.2) der gabelförmigen Abkröpfungen 41, 42 der Installationsklammer 4 eingesetzt. Damit ist der lichte Querschnitt im Öffnungsbereich des Installationskanals 3 überbrückt und die Seitenwände 33, 34 sind im Bereich dieser Überbrückung festgelegt.

Aus Fig.2 ist die detaillierte Darstellung der neuerungsgemäßen Installationsklammer 4 ersichtlich. Die gabelförmigen Abkröpfungen 41, 42 werden von den Gabelschenkeln 413, 414, 415, 416 gebildet, welche wiederum die Gabelöffnungen 411, 412 begrenzen.

Im mittleren Bereich der Längserstreckung der Installationsklammer 4 ist die axial verlaufende Verstärkungssicke 43 eingeformt, welche im vorgegebenen Abstand A von den Abkröpfungen 41, 42 endet. Diese Verstärkungssicke 43 bringt die notwendige Stabilität, um die Klemmkraft der Seitenwände 33, 34 des Installationskanals 3 bei der Festlegung der Installationsklammer 4 an den konvergierend zueinander verlaufenden Abwinkelungen 11, 12 und die Gewichtskraft der eingelegten Leitungen besser aufnehmen zu können.

## Patentansprüche

1. Installationskanal zur Verlegung von elektrischen Leitungen mit einem Boden und zwei einstückig mit diesem verbundenen Seitenwänden, welche an ihren freien Rändern längsverlaufend rechtwinkelig zum Kanalinneren gerichtete Wandbereiche aufweisen, die als Lagerstelle für Installationsbrücken, Leitungsklammern oder ähnliche Installationshilfen ausgebildet sind, dadurch gekennzeichnet, daß die Wandbereiche (1, 2) an ihren freien Enden in den Kanalinnenraum (31) konvergierend zueinanderverlaufende Abwinkelungen (11, 12) aufweisen, und daß die Installationsklammern (4) an ihren freien Ende divergierend voneinander weggerichtete gabelförmige Abkröpfungen (41, 42) besitzen, welche mit ihren Gabelöffnungen (411, 412) zu den Abwinkelungen (11, 12) gerichtet sind und in ihrer lichten Gabelweite den Querschnittsabmessungen der Abwinkelungen (11, 12) entsprechen.

2. Installationskanal nach Anspruch 1, dadurch gekennzeichnet, daß die Installationsklammern (4) eine axial verlaufende Verstärkungssicke (43) aufweisen, welche im vorgegebenen Abstand (A) von den Abkröpfungen (41, 42) endet.

3. Installationskanal nach Anspruch 1, dadurch gekennzeichnet, daß die die gabelförmigen Abkröpfungen (41, 42) bildenden Gabelschenkel (413, 414, 415, 416) in unterschiedlicher Länge ausgebildet sind.

4. Installationskanal nach Anspruch 3, dadurch gekennzeichnet, daß die äußeren Gabelschenkel (413, 415) kürzer ausgebildet sind als die inneren Gabelschenkel (414, 416).

## Claims

1. Installation trunking for the installation of electrical leads with a base and two single-piece side walls which are connected with this base, the free edges of these side walls having wall areas along the whole length at a right angle to the trunking interior, the wall areas being formed in sucha way as to provide a receptacle for installation bridges, lead clips or similar installation aids, characterised in that the wall areas (1,2) have angled parts (11,12) on their free ends which converge towards the trunking interior (31), and that the installation clips (4) have fork-shaped bends (41,42) diverging from each other on their free ends, the forked openings (411, 412) of which are directed towards the angled parts (11,12), and the nominal fork width of which corresponds to the cross-sectional dimensions of the angled parts (11,12).

2. Installation trunking in accordance with Claim 1, characterised in that the installation clips (4) have a reinforcement bead (43) which runs axially, which ends at the specified distance (A) from the bends (41, 42).

3. Installation trunking in accordance with Claim 1, characterised in that the fork blades (413, 414, 415, 416) which form the fork-shaped bends (41,42) are of different lengths.

4. Installation trunking in accordance with Claim 3, characterised in that the outer fork blades (413, 415) are shorter than the inner fork blades (414, 416).

## Revendications

1. Goulotte d'installation pour la pose de câbles électriques avec un fond et des parois latérales rattachées à celui-ci, lesquelles sont munies de retours perpendiculaires à elles-mêmes orientés vers l'intérieur de la goulotte, qui sont prévus pour le montage de ponts d'installation, d'agrafes de maintien de câbles ou d'autres moyens d'aide à l'installation, caractérisée en ce que les extrémités libres des retours (1, 2) convergent vers la partie intérieure de la goulotte en formant une paroi inclinée (11, 12) et que l'agrafe d'installation (4) présente à leurs extrémités divergentes l'une de l'autre des coudes (41, 42) en forme fourchue, lesquels en raison de l'ouverture de la fourchette (411, 412) s'emboîtent sur les retours (11, 12) et que cette ouverture corresponde aux dimensions de la section des retours (11, 12).

2. Goulotte d'installation selon la revendication 1, caractérisée en ce que l'agrafe d'installation (4) possède dans la direction axiale une nervure de renfort (43), laquelle se termine selon la distance A sur les retours (41, 42).

3. Goulotte d'installation selon la revendication 1, caractérisée en ce que la forme fourchue des coudes (41, 42) représentent les dents d'une fourchette (413, 414, 415, 416) de différentes longueurs.

4. Goulotte d'installation selon la revendication 3, caractérisée en ce que les dents extérieures (413, 415) sont plus courtes que les dents intérieures (414, 416).
